# EUROPÄISCHE PATENTSCHRIFT

(11) **EP 0 657 480 B1**
(45) Veröffentlichungstag und Bekanntmachung des Hinweises auf die Patenterteilung: **25.06.1997**
(21) Anmeldenummer: 94118844.3
(22) Anmeldetag: 30.11.1994
(51) Int. Cl.: C08F 285/00, C08L 51/00

(54) **Dreistufige Pfropfcopolymerisate und solche enthaltende witterungsbeständige, matte thermoplastische Formmassen mit hoher Kältezähigkeit**
Three-stage graft copolymers and weather-resistant, matt thermoplastic moulding compositions with high cold impact strength containing the same
Copolymères greffés en trois étapes et masses à mouler thermoplastiques les contenants résistantes aux intempéries, mattes et ayant une résistance élevée aux chocs à froid

(30) Priorität: 09.12.1993 DE 4342045
(43) Veröffentlichungstag der Anmeldung: 14.06.1995
(73) Patentinhaber: BASF AKTIENGESELLSCHAFT, 67056 Ludwigshafen (DE)
(72) Erfinder: Niessner, Norbert, Dr., D-67159 Friedelsheim (DE); Fischer, Wolfgang, Dr., D-67067 Luidwigshafen (DE)

(56) Entgegenhaltungen:
- EP-A- 0 260 558
- EP-A- 0 450 511
- DE-A- 3 405 938
- DE-A- 3 421 353

## Beschreibung

### Die vorliegende Erfindung betrifft

Pfropfcopolymerisate, erhältlich durch
(A) Polymerisation von 10 bis 89 Gew.-% einer Mischung bestehend im wesentlichen aus entweder
   (a1) 70 bis 99,89 Gew.-% eines C₁-C₁₈-Alkylrestes der Acrylsäure, wobei der Alkylrest einfach mit einer Phenyl- oder Phenoxygruppe substituiert sein kann,
   (a2) 0,1 bis 10 Gew.-% eines polyfunktionellen Monomeren,
   (a3) 0 bis 29,89 Gew.-% eines von (a1) und (a2) verschiedenen, damit copolymerisierbaren ethylenisch ungesättigten Monomeren, das keine Säuregruppe trägt, und
   (a4) 0,01 bis 10 Gew.-% eines mindestens eine Säuregruppe enthaltenden copolymerisierbaren Monomeren
      oder
   (a5) 49,99 bis 99,99 Gew.-% mindestens eines Diens,
   (a6) 0 bis 50 Gew.-% eines damit copolymerisierbaren Monomeren, das keine Säuregruppe trägt, und
   (a7) 0,01 bis 10 Gew.-% eines mindestens eine Säuregruppe enthaltenden copolymerisierbaren Monomeren
   in Gegenwart von 1 bis 80 Gew.-% eines vernetzten Siliconkautschuks,
   und
(B) Polymerisation von 10 bis 89 Gew.-% einer Mischung bestehend im wesentlichen aus
   (b1) 50 bis 99,99 Gew.-% einer Styrolverbindung der allgemeinen Formel (I) 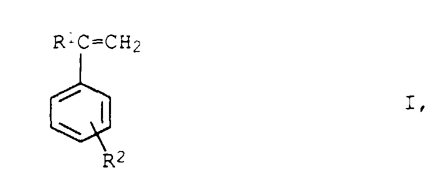 in der R¹ und R² unabhängig voneinander für Wasserstoff, C₁-C₈-Alkyl oder mit C₁-C₄-Alkyl bis zu dreifach substituiertes Phenyl bedeuten und/oder eines C₁-C₈-Alkylesters der Methacryl- oder Acrylsäure,
   (b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit C₁-C₄-Alkyl N-substituiertes Maleinimid, Vinylester von aliphatischen C₂-C₈-Carbonsäuren, Acrylamid und Vinylmethylether
      und
      (b3) 0,01 bis 20 Gew.-% eines mindestens eine basische Gruppe enthaltenden copolymerisierbaren Monomeren
      in Gegenwart des Pfropfcopolymerisates (A).

Des weiteren betrifft die Erfindung thermoplastische Formmassen, bestehend im wesentlichen aus den erfindungsgemäßen Pfropfcopolymerisaten und mindestens einem Polymeren mit einer Glasübergangstemperatur von mehr als 25°C, Verfahren zur Herstellung der erfindungsgemäßen Pfropfcopolymerisate und thermoplastischen Formmassen, die Verwendung der erfindungsgemäßen Pfropfcopolymerisate zur Herstellung von thermoplastischen Formmassen, die Verwendung der erfindungsgemäßen thermoplastischen Formmassen zur Herstellung von Formkörpern sowie Formkörper, erhältlich aus diesen thermoplastischen Formmasen.

Pfropfcopolymerisate, enthaltend im wesentlichen einen Kern aus einem Silikonkautschuk, einer ersten Hülle auf der Basis eines Alkylesters der Acrylsäure und einer äußeren Hülle auf der Basis eines harzbildenden Monomers, sind beispielsweise aus der EP-A 246,537 bekannt. Nachteilig ist jedoch, daß die Kombination der Eigenschaften, Kältezähigkeit, Witterungsstabilität und matte Oberfläche, bei daraus hergestellten Formmassen unbefriedigend ist.

Zur Herstellung matter Oberflächen ist es bekannt, Polymere mit sowohl sauren als auch basischen Gruppen zu verwenden. So beschreibt die DE 34 05 938 Polymermischungen mit matter Oberfläche auf der Basis von Pfropfcopolymerisaten mit sauren Funktionen und Thermoplastharzen mit basischen Funktionen. Die DE 34 21 353 beschreibt die Verwendung saurer als auch gleichzeitig basischer Monomerer in der Pfropfhülle einer Kautschukkomponente, und die Verwendung dieser Pfropfkautschuke als Mattierungsmittel. Die EP-A 450 511 beschreibt Formmassen, bestehend aus einem säuregruppenhaltigen Kautschukkern aus Acrylat- oder Dienkautschuk und einer darauf gepfropften Hülle aus vinylaromatischen und polymeren Monomeren mit einem basischen Comonomeren. Diese matten Formmassen auf Acrylatkautschuk-Basis weisen im allgemeinen befriedigende bis gute Zähigkeit bei Raumtemperatur auf, verbunden mit guter Witterungsstabilität. Die Kältezähigkeit, insbesondere bei -40°C, ist jedoch zu gering. Matte Formmassen auf Dienkautschukbasis besitzen dagegen gute Kältezähigkeitswerte, jedoch eine schlechte Witterungsstabilität.

Aufgabe der vorliegenden Erfindung war es daher, Pfropfcopolymerisate, die zu thermoplastischen Formmassen verarbeitet werden können, bereitzustellen, wobei letztere sowohl hohe Kältezähigkeitswerte als auch eine gute Witterungsstabilität bei gleichzeitig matter Oberfläche aufweisen.

Demgemäß wurden die eingangs definierten Pfropfcopolymerisate gefunden.

Des weiteren wurden thermoplastische Formmassen, bestehend im wesentlichen aus den erfindungsgemäßen Pfropfcopolymerisaten und mindestens einem Polymeren mit einer Glasübergangstemperatur von mehr als 25°C, Verfahren zur Herstellung der erfindungsgemäßen Pfropfcopolymerisate und thermoplastischen Formmassen, die Verwendung der erfindungsgemäßen Pfropfcopolymerisate zur Herstellung von thermoplastischen Formmassen, die Verwendung der erfindungsgemäßen thermoplastischen Formmassen zur Herstellung von Formkörpern sowie Formkörper, erhältlich aus diesen thermoplastischen Formmassen, gefunden.

Geeignete vernetzte Siliconkautschuke zur Bildung des erfindungsgemäßen Kerns sind im allgemeinen vernetzte Siliconkautschuke aus Einheiten der allgemeinen Formeln R₂SiO, RSiO_{3/2}, R₃SiO_{1/2} und SiO_{2/4}, wobei R einen einwertigen Rest, und im Fall von R₃SiO_{1/2} ggf. auch OH, darstellt. Die Mengen der einzelnen Siloxaneinheiten heiten sind dabei üblicherweise so bemessen, daß auf 100 Einheiten der Formel R₂SiO 0 bis 10 Mol-Einheiten der Formel RSiO_{3/2}, 0 bis 1,5 Mol-Einheiten R₃SiO_{1/2} und 0 bis 3 Mol-Einheiten SiO_{2/4} vorhanden sind.

R steht dabei für C₁-C₁₈-Alkyl, vorzugsweise für C₁-C₁₂, besonders bevorzugt für C₁-C₆-Alkyl wie Methyl, Ethyl, n-Propyl, i-Propyl, n-Butyl, i-Butyl, sek-Butyl, tert.-Butyl, Pentyl oder Hexyl, insbesondere Methyl oder Ethyl, oder C₆-C₁₀-Aryl wie Phenyl oder Naphthyl, insbesondere Phenyl, oder C₁-C₁₀-Alkoxy und Aryloxy wie Methoxy, Ethoxy oder Phenoxy oder radikalisch angreifbare Gruppen wie Vinyl-, Allyl-, Phenyl, Halogen- oder Mercaptogruppen, bevorzugt Vinyl- oder Mercapto-C₁-C₄-alkylreste, insbesondere Mercaptopropyl, Phenyl und Vinyl.

In einer besondere Ausführungsform setzt man Siliconkautschuke ein, bei denen mindestens 80 % aller Reste R Methylreste sind. Des weiteren sind Siliconkautschuke bevorzugt, in denen R für Methyl und Ethyl steht.

In einer weiteren Ausführungsform setzt man Siliconkautschuke ein, die die obengenannten radikalisch angreifbaren Gruppen in Mengen im Bereich von 0,01 bis 10, bevorzugt von 0,2 bis 2 Mol-%, bezogen auf alle Reste R, enthalten. Solche Siliconkautschuke sind beispielsweise in der EP-A 260 558 und in der EP-A 492 376 beschrieben.

Des weiteren kann man die in der DE-A 25 39 572 beschriebenen Siliconkautschuke als Kerne einsetzen, oder solche, die aus der EP-A 370 347 bekannt sind.

Den Kern setzt man erfindungsgemäß in einer Menge im Bereich von 1 bis 80, bevorzugt von 5 bis 70, besonders bevorzugt von 10 bis 30 Gew.-%, bezogen auf die Gesamtmenge an Pfropfcopolymerisat, ein.

Die Komponente (A) ist erfindungsgemäß eine Mischung aus im wesentlichen
- (a1): 70 bis 99,89 Gew.-%, vorzugsweise 75 bis 99,5, besonders bevorzugt 80 bis 99 Gew.-% eines C₁-C₁₈-Alkylesters der Acrylsäure, wobei der Alkylrest einfach mit einer Phenyl-oder Phenoxygruppe substituiert sein kann.
- (a2): 0,1 bis 10 Gew.-%, vorzugsweise 0,5 bis 5, besonders bevorzugt 1 bis 3 Gew.-% eines polyfunktionellen Monomeren,
- (a3): 0 bis 29,89 Gew.-%, vorzugsweise 0 bis 20, besonders bevorzugt 0 bis 10 Gew.-% eines von (a1) und (a2) verschiedenen, damit copolymerisierbaren ethylenisch ungesättigten Monomeren, das keine Säuregruppen trägt, und
- (a4): 0,01 bis 10 Gew.-%, vorzugsweise 0,1 bis 5, besonders bevorzugt 0,5 bis 2 Gew.-% eines mindestens eine Säuregruppe enthaltenden copolymerisierbaren Monomeren,
oder
- (a5): 49,99 bis 99,99 Gew.-%, vorzugsweise 79,99 bis 99,9, besonders bevorzugt 85,5 bis 99,5 Gew.-% mindestens eines Diens,
- (a6): 0 bis 50 Gew.-%, vorzugsweise 0 bis 20, besonders bevorzugt 0 bis 15 Gew.-% eines von (a5) verschiedenen, damit copolymerisierbaren Monomeren, das keine Säuregruppe trägt, und
- (a7): 0,01 bis 10 Gew.-%, vorzugsweise 0,1 bis 5, besonders bevorzugt von 0,5 bis 2 Gew.-% eines mindestens eine Säuregruppe enthaltenden copolymerisierbaren Monomeren.

Als C₁-C₁₈-Alkylester der Acrylsäure (Komponente (a1)) verwendet man bevorzugt die C₂-C₈-Alkylreste wie Ethyl-, n-Propyl-, i-Propyl-, n-Butyl-, Isobutyl-, tert.-Butyl-, sek.-Butyl-, Pentyl-, Hexyl-, Heptyl-, n-Octyl-, 2-Ethylhexylacrylat, bevorzugt Ethyl-, n-Propyl-, n-Butyl- und 2-Ethylhexylacrylat. Des weiteren können die C₁-C₁₈-Alkylester mit einer Phenyl- oder Phenoxygruppe substituiert sein, bevorzugt Phenyl-C₁-C₄-Alkylester wie Benzylacrylat, Phenylethyl-, Phenylpropyl oder Phenoxyethylacrylat. Die substituierten C₁-C₁₈-Alkylester können auch im Gemisch mit unsubstituierten C₁-C₁₈-Alkylestern der Acrylsäure eingesetzt werden, wobei man bevorzugt mindestens ein C₁-C₁₈-Alkylester der Acrylsäure einsetzt.

Als polyfunktionelles Monomer (Komponente (a2)) eignen sich beispielsweise vinylisch ungesättigte Verbindungen mit wenigstens zwei Doppelbindungen wie Vinylbenzole wie Divinylbenzol und Trivinylbenzol; Triallylcyanurat und Triallylisocyanurat; Diallylmaleat, Diallylfumarat und Diallylphthalat, die üblicherweise vernetzend wirken.

Des weiteren eignen sich nach bisherigen Beobachtungen pfropfaktiv und gegebenenfalls vernetzend wirkende ungesättigte Monomere, die Epoxi-, Hydroxi-, Carboxyl-, Amino- oder Säureanhydridgruppen tragen, wie Hydroxi-C₁-C₆-alkylmeth- und Hydroxi-C₁-C₆-alkylacrylate, bevorzugt Hydroxiethylmeth-, Hydroxipropylmethacrylat, Hydroxiethylacrylat, Hydroxipropylacrylat.

Als besonders geeignete Monomere für die Komponente (a2) haben sich die Tricyclodecenylacrylate Ia und Ib 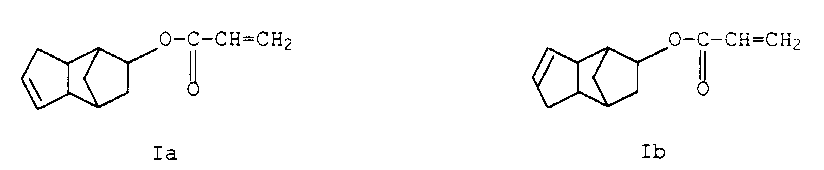 erwiesen (s. DE-A 1,260,135), die man auch in Form ihrer Mischungen einsetzen kann.

Als von den Komponenten (a1) und (a2) verschiedene, mit diesen Komponenten jedoch copolymerisierbare ethylenisch ungesättigte Monomere, die keine Säuregruppe enthalten (Komponente (a3)), verwendet man bevorzugt vinylaromatische Monomere wie Styrol, α-Methylstyrol, p-Methylstyrol, tert.-Butylstyrol, 1,1-Diphenylethylen, Monochlorstyrol und Vinyltoluol, besonders bevorzugt Styrol;
Acrylnitril und Methacrylnitril, bevorzugt Acrylnitril;
C₁-C₄-Ester der Acryl- und Methacrylsäure wie Methylmethacrylat ("MMA"), Ethylmethacrylat, n-, i-Propylmethacrylat, n-Butylmethacrylat,
Isobutylacrylat, sek.-Butylacrylat und tert.-Butylacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat und tert.-Butylacrylat, wobei Methylacrylat besonders bevorzugt ist, sowie Mischungen dieser Monomeren;
C₅-C₈-Cycloalkylester der Acryl- und Methacrylsäure wie Cyclopentyl-, Cyclopentyl-, Cyclohexyl-, Cycloheptyl- und Cyclooctylacrylat, Cyclohexyl-, Cycloheptyl- und Cyclooctylmethacrylat, bevorzugt
Isobornylmethacrylat;
Maleinsäureimide, die am Imidstickstoffatom mit einer C₁-C₆-Alkylgruppe wie Methyl, Ethyl, n-, i-Propyl, n-, i-, sek.-, tert.-Butyl, Pentyl und Hexyl, substituiert sind, bevorzugt N-Methylmaleinsäureimid, sowie N-C₆-C₁₀-Aryl- oder N-C₆-C₁₀-Aryl-C₁-C₄-alkylsubstituierte Maleinsäureimide, wobei die Arylgruppen bis zu dreifach mit C₁-C₄-Alkyl substituiert sein können, wie N-Phenylmaleinimid und N-Tolylmaleinimid, bevorzugt N-Phenylmaleinimid;
Maleinsäureanhydrid sowie Maleinsäure-C₁-C₆-Alkylester und Maleinsäure-di-(C₁-C₆-alkyl)ester, bevorzugt Maleinsäureanhydrid;
Diene wie Butadien und Isopren, bevorzugt Butadien.

Als Komponente (a4) setzt man erfindungsgemäß copolymerisierbare Monomere ein, die mindestens eine Säuregruppe enthalten. Insbesondere eignen sich hierfür Monomere, die Carbonsäure- oder Sulfonsäuregruppen tragen. Bevorzugt setzt man α,β-ungesättigte Carbonsäuren wie Acrylsäure oder Methacrylsäure, ferner Maleinsäure, Fumarsäure, Itaconsäure, Citraconsäure (Methylmaleinsäure), Crotonsäure, Zimtsäure sowie Vinylsulfonsäure oder benzolsulfonsäure ein.

In einer weiteren Ausführungsform verwendet man anstelle der Komponenten (a1) bis (a4) die Komponenten (a5) bis (a7).

Als Komponente (a5) setzt man ein Dien wie Butadien oder Isopren oder deren Derivate wie Chloropren oder deren Mischungen ein, bevorzugt Butadien.

Als Komponente (a6) setzt man die unter Komponente (a3) bereits genannten Monomere ein.

Als Komponente (a7) setzt man die unter Komponente (a4) bereits genannten Monomere ein.

Die Glasübergangstemperatur der 1. Hülle (A) liegt üblicherweise unterhalb von 0°C, bevorzugt unterhalb von -20°C und besonders bevorzugt unterhalb von -30°C (Die Glasübergangstemperatur wird z.B. mit Hilfe der DSC ermittelt; K.H. Illers; Makromol. Chem. 127, 1 (1969)).

Die Herstellung der 1. Hülle (A) erfolgt in der Regel nach bekannten Polymerisationsverfahren wie Emulsions-, Masse-, Lösungs- oder Suspensionspolymerisation, bevorzugt in wäßriger Emulsion in Gegenwart einer wäßrigen Emulsion des Siliconkautschuk-Kerns (s. DE-PS 12 60 135).

Es können die üblichen Emulgatoren wie die Alkalimetallsalze von Alkyl- oder Alkylarylsulfonsäuren, Alkylsulfate, Fettalkoholsulfonate, Salze höherer Fettsäuren mit 10 bis 30 C-Atomen oder Harzseifen für die Herstellung der Pfropfgrundlage über Emulsionspolymerisation verwendet werden. Vorzugsweise werden Natriumsalze von Alkylsulfonaten oder von Fettsäuren mit 10 bis 18 C-Atomen verwendet. Im allgemeinen werden Emulgatoren in Mengen von 0,1 bis 5 Gew.-%, bevorzugt von 0,5 bis 2 Gew.-%, bezogen auf das Gesamtgewicht der für die Herstellung der 1. Hülle (A) verwendeten Monomeren eingesetzt.

Als Coemulgatoren können gewünschtenfalls nichtionische oder anionische Tenside eingesetzt werden. Nichtionische Coemulgatoren sind beispielsweise Polyoxyethylenderivate von Fettalkoholen oder Fettsäuren. Beispielhaft seien genannt: POE (3)-Laurylalkohol, (POE = Polyoxyethylen (x) mit x = Polymerisationsgrad), POE (20)-Oleylalkohol, POE (7)-Nonylphenol, POE (10)-Stearat. Im allgemeinen wird bei einem Wasser/Monomerverhältnis von 10:1 bis 0,7:1 gearbeitet.

Als Polymerisationsinitiatoren dienen üblicherweise Hydroperoxide, die gebräuchlichen Persulfate, sowie Redoxsysteme wie Hydroperoxid und Ascorbinsäure, gewünschtenfalls unter Zusatz von Fe²⁺-Salzen und Komplexbildner. Die gebräuchlichen Redoxsysteme sind dem Fachmann bekannt. Die Menge an Initiatoren richtet sich in der Regel in bekannter Weise nach dem gewünschten Molekulargewicht und liegt üblicherweise im Bereich von 0,01 bis 1, bevorzugt von 0,05 bis 0,5 Gew.-%, bezogen auf das Gesamtgewicht der Monomeren.

Als Polymerisationshilfsstoffe verwendet man im allgemeinen die üblichen Puffersubstanzen wie Natriumhydrogencarbonat, Natriumpyrophosphat (mit denen pH-Werte zwischen 6 und 9 eingestellt werden können), sowie Molekulargewichtsregler, wie Mercaptane, Terpinole oder dimeres alpha-Methylstyrol.

Die genauen Polymerisationsbedingungen, insbesondere Art, Dosierung und Menge des Emulgators werden üblicherweise innerhalb der oben angegebenen Bereiche im einzelnen so bestimmt, daß der erhaltene Latex des vernetzten Polymeren einen d(50)-Wert im Bereich von 40 bis 2000 nm, bevorzugt von 60 bis 1000 nm, besonders bevorzugt im Bereich von 80 bis 800 nm besitzt.

Bei der Herstellung der 1. Hülle A in wäßriger Emulsion arbeitet man üblicherweise bei Temperaturen im Bereich von 20 bis 100, bevorzugt von 40 bis 80°C.

Die Komponente (A) setzt man erfindungsgemäß in einer Menge im Bereich von 10 bis 89, bevorzugt von 25 bis 60, besonders bevorzugt von 30 bis 55 Gew.-%, bezogen auf die Gesamtmenge an Pfropfcopolymerisat, ein.

Die Komponente (B), 2. Hülle, ist erfindungsgemäß eine Mischung aus im wesentlichen
(b1) 50 bis 99,99 Gew.-%, vorzugsweise 55 bis 99,9, besonders bevorzugt 60 bis 89,5 Gew.-%, einer Styrolverbindung der allgemeinen Formel I 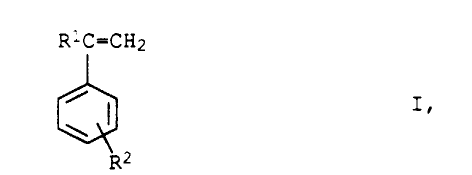 in der R¹ und R² unabhängig voneinander für Wasserstoff, C₁-C₈-Alkyl oder mit C₁-C₄-Alkyl bis zu dreifach substituiertes Phenyl bedeuten
   und/oder
   eines C₁-C₈-Alkylesters der Methacryl- oder Acrylsäure,
(b2) 0 bis 50 Gew.-%, bevorzugt 0 bis 40, besonders bevorzugt 10 bis 40 Gew.-%, eines Monomeren ausgewählt aus der Gruppe, bestehend aus Methacrylnitril, Acrylnitril, Methacrylsäure, Acrylsäure, Maleinsäureanhydrid, mit C₁-C₄-Alkyl N-substituiertes Maleinimid, Vinylester von aliphatischen C₂-C₈-Carbonsäuren, Acrylamid und Vinylmethylether, und
(b3) 0,01 bis 20, bevorzugt 0,1 bis 10, besonders bevorzugt 0,5 bis 5 Gew.-%, eines mindestens eine basische Gruppe enthaltenden copolymerisierbaren Monomeren.

Als Styrolverbindung der allgemeinen Formel I (Komponente (b1)) setzt man vorzugsweise Styrol, α-Methylstyrol, 1,1-Diphenylethylen sowie mit C₁-C₈-Alkyl kernalkylierte Styrole wie p-Methylstyrol oder tert.-Butylstyrol, ein, besonders bevorzugt Styrol und α-Methylstyrol.

Als C₁-C₈-Alkylester der Methacryl- oder Acrylsäure verwendet man erfindungsgemäß Methylmethacrylat ("MMA"), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere, Methylacrylat ("MA"), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei n-Butylacrylat besonders bevorzugt ist, sowie Mischungen dieser Monomere untereinander als auch mit den Methacrylaten und/oder Styrolverbindungen der allgemeinen Formel I.

Als Komponente (b2) setzt man erfindungsgemäß gewünschtenfalls ein Monomer ausgewählt aus der Gruppe, bestehend aus Methacrylnitril, Acrylnitril, Methacrylsäure, Acrylsäure, Maleinsäureanhydrid, mit C₁-C₄-Alkyl N-substituiertes Maleinimid, Vinylester von aliphatischen C₂-C₈-Carbonsäuren wie Vinylacetat oder Vinylpropionat, Acrylamid und Vinylmethylether ein.

In einer bevorzugten Ausführungsform setzt man eine Mischung von Styrol und Acrylnitril (Molverhältnis üblicherweise im Bereich von 10:1 bis 1:1, bevorzugt von 5:1 bis 1:1 Mol-%), oder α-Methylstyrol und Acrylnitril (Molverhältnis üblicherweise im Bereich von 10:1 bis 1:1, bevorzugt von 5:1 bis 1:1 Mol-%,), oder Methylmethacrylat und Styrol (Molverhältnis üblicherweise im Bereich von 10:1 bis 1:1, bevorzugt von 5:1 bis 1:1 Mol-%), oder Methylmethacrylat alleine, d.h. keine Komponente (b2), ein.

Als basische Gruppen tragende Monomere, Komponente (b3) sind solche zu nennen, die mit den Komponenten (b1) und (b2) copolymerisierbar sind und mindestens eine basische Gruppe tragen. Bevorzugte Monomere (b3) enthalten im Molekül eine tertiäre Aminogruppe. Hier seien als Beispiel genannt: Dimethylaminoethylacrylat, -methacrylat, Morpholin-acrylat, Morpholin-methacrylat, N-Vinylimidazol, p-Dimethylaminostyrol, N-Vinylcarbazol, N-Vinylindol, N-Vinylpyrrol, N-Vinylpyrimidin, 2-, 3- und 4-Vinylpyridin, sowie Mischungen dieser Monomere. Besonders bevorzugte Monomere sind Ester der Acrylsäure- oder Methacrylsäure mit aliphatischen Alkoholen, die im Alkylrest eine tertiäre Aminogruppe enthalten. Als bevorzugtes Beispiel seien Dimethylaminoethylacrylat und Dimethylaminoethylmethacrylat genannt.

Die Herstellung der 2. Hülle, (B), erfolgt in der Regel nach üblichen Polymerisationsverfahren wie Emulsions-, Masse-, Lösungs- oder Suspensionspolymerisation in Gegenwart des Pfropfcopolymerisates (A).

Es ist jedoch vorteilhaft, die Pfropfcopolymerisation von Komponente (B) auf das als Pfropfgrundlage dienende Polymerisat (A) wiederum in wäßriger Emulsion durchzuführen. Sie kann im gleichen System wie die Polymerisation der Pfropfgrundlage vorgenommen werden, wobei weiterer Emulgator und Initiator zugegeben werden können. Diese müssen mit den zur Herstellung von A2 verwendeten Emulgatoren bzw. Initiatoren nicht identisch sein. Emulgator, Initiator und Polymerisationshilfsstoffe können jeweils allein oder in Mischung zur Emulsion der Pfropfgrundlage (A) vorgelegt werden. Es kann jede mögliche Kombination von Vorlage und Zulauf einerseits und Initiator, Emulgator und Polymerisationshilfsmittel andererseits in Frage kommen. Die bevorzugten Ausführungsformen sind dem Fachmann bekannt. Das aufzupfropfende Monomergemisch kann dem Reaktionsgemisch auf einmal, absatzweise in mehreren Stufen oder auch kontinuierlich während der Polymerisation zugegeben werden.

In einer weiteren, bevorzugten Ausführungsform befinden sich saure Gruppen tragende Monomere in der Pfropfhülle (Komponente (B)) und basische Gruppen tragende Monomere im Kautschuk (Komponente (A)). Hier ist Komponente (a4) oder (a7) 0,01 bis 10 Gew.-% eines eine oder mehrere basische Gruppen tragenden Monomeren und Komponente (b3) 0,01 bis 20 Gew.-% eines eine oder mehrere saure Gruppen tragenden Monomeren. Diese Monomere sind vorstehend schon eingehend beschrieben worden. Alle anderen vorstehenden Beschreibungen betreffend Komponente (A) und deren Bestandteile gelten selbstverständlich auch für diese weitere, bevorzugte Ausführungsform.

Die erfindungsgemäßen Pfropfcopolymerisate weisen vorzugsweise eine mittlere Teilchengröße im Bereich von 0,05 bis 10, besonders bevorzugt von 0,1 bis 1 µm, auf.

Die Komponente (B) setzt man erfindungsgemäß in einer Menge im Bereich von 20 bis 89, bevorzugt 25 bis 60, besonders bevorzugt 30 bis 55 Gew.-%, bezogen auf die Gesamtmenge an Pfropfcopolymerisat, ein.

Die so hergestellten erfindungsgemäßen Pfropfcopolymerisate können nach bekannten Verfahren aufgearbeitet werden, z.B. durch Koagulation der Latices mit Elektrolyten (Salze, Säuren, Basen), durch Erwärmung oder Ausfrieren, durch Ultraschall, durch Scherung oder durch Kombination dieser Methoden.

Die erfindungsgemäßen Pfropfcopolymerisate können für sich allein als Formmassen verwendet werden. Hierzu können sie beispielsweise durch Sprühtrocknung aufgearbeitet werden. Bevorzugt verwendet man die erfindungsgemäßen Pfropfcopolymerisate jedoch zur Abmischung mit einem Thermoplasten, um dessen Kältezähigkeit zu erhöhen. Zur Modifizierung geeignete Thermoplasten haben übergangstemperaturen von mehr als 25°C, bevorzugt über 60°C. Sie werden im folgenden als Matrix bezeichnet.

Als Beispiele für geeignete Matrices verwendet man erfindungsgemäß die Vinyl- und Methacryl- bzw. -acrylpolymere, die als Homo- und Copolymerisate aus den unter den Komponenten (a4), (b2) und (b3) genannten Monomeren herstellbar sind. Insbesondere seien beispielhaft genannt:
Homo- und Copolymerisate aus einem vinylaromatischen Monomeren und einem polaren, copolymerisierbaren, ethylenisch ungesättigten Monomeren wie Polystyrol, Polymethylmethacrylat, Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol.Acrylnitril-tert.-Butylmethacrylat-Copolymere, Styrol-Acrylnitril-tert.-Butylmethacrylat-Copolymere.

Die genannten Copolymerisate entstehen beispielsweise häufig bei der Pfropfpolymerisation zur Herstellung der erfindungsgemäßen Pfropfcopolymerisate als Nebenprodukte, besonders dann, wenn große Mengen der Komponente (B) auf kleine Mengen der Komponente (A) gepfropft werden. Die Vinylpolymeren und (Meth)-Acrylpolymeren können nach bekannten radikalischen, anionischen und kationischen Polymerisationsverfahren hergestellt werden. Auch die bekannte Redoxpolymerisation oder die bekannte Polymerisation mit metallorganischen Mischkatalysatoren kann vorteilhaft sein.

Als weitere erfindungsgemäß einzusetzende Matrix kann Polycarbonat (PC) allein oder in Mischung mit anderen der obengenannten Matrix-Polymere eingesetzt werden.

Bevorzugte erfindungsgemäße Blendkomponenten sind beispielsweise Abmischungen aus Polycarbonat mit den vorstehend beschriebenen erfindungsgemäßen Pfropfcopolymerisaten und anderen Thermoplasten. Bevorzugt liegt hierbei der Polycarbonat-Anteil zwischen 5 und 95 Gew.-% und der Anteil der erfindungsgemäßen Pfropfcopolymerisate und weiteren Thermoplasten als Matrix zwischen 5 und 95 Gew.-%.

Geeignete Polycarbonate sind beispielsweise solche auf Basis von Diphenolen der allgemeinen Formel (II)

HO-Ar-A-Ar-OH (II)

in der
- Ar: unsubstituiertes oder bis zu dreifach mit C₁-C₄-Alkyl oder Halogen substituiertes Phenyl
- A: Einfachbindung, C₁-C₃-Alkylen-, C₂-C₃-Alkyliden-, C₃-C₆-Cycloalkylidengruppen sowie -S- oder -SO₂- bedeuten.

Bevorzugte Diphenole der allgemeinen Formel (II) sind beispielsweise Hydrochinon, Resorcin, 4,4'-Dihydroxybiphenyl, 2,2-Bis(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Die Diphenole der allgemeinen Formel (II) sind an sich bekannt oder nach bekannten Verfahren herstellbar.

Die Diphenole der allgemeinen Formel (II) können sowohl einzeln als auch im Gemisch zur Herstellung der Polycarbonate verwendet werden.

Die geeigneten Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 (gemessen als 0,5 gew.-%ige Lösungen der Polymere in Chloroform bei 23°C) aufweisen. Dies entspricht mittleren Molekulargewichten M_{w} (Gewichtsmittel) von 10.000 bis 200.000, vorzugsweise von 20.000 bis 80.000 g/mol.

Die Herstellung der Polycarbonate kann beispielsweise durch Umsetzung der Diphenole der allgemeinen Formel (II) mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 33 34 782).

Geeignete Kettenabbrecher sind beispielsweise Phenol, p-tert.-Butylphenol, aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

Als Matrix können beispielsweise auch Polycarbonat-Polysiloxan-Blockcopolymere, Polycarbonat-Polyether-Blockcopolymere und Polycarbonat-Polyester-Blockcopolymere dienen.

Des weiteren sind als Matrices in der Regel auch aromatische Polyester und Polyestercarbonate einsetzbar.

Die erfindungsgemäßen thermoplastischen Formmassen können als weitere Bestandteile übliche Zusatz- und Hilfsstoffe enthalten. Als solche seien beispielsweise genannt: Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform enthalten.

Die Zusatz- und Hilfsstoffe werden in üblichen Mengen, vorzugsweise in Mengen von bis zu 50 Gew.-%, bezogen auf das Gesamtgewicht der thermoplastischen Formmasse, eingesetzt. Verträgliche Kunststoffe können auch einen höheren Anteil ausmachen.

Neben den als Matrices genannten Polymeren kann man die erfindungsgemäßen Pfropfcopolymerisate auch mit den folgenden Polymeren mischen:
Polyphenylenether, Polyamide, Polyester, Polyurethane, Polyethylenhomo-und copolymere, Polypropylenhomo- und copolymere, halogenierte Polyolefine wie Polyvinylchlorid, Polytetrafluorethylen und Derivate, weiterhin Polyoxymethylene, Polyetherketone, Polyethersulfone, Polysulfone eingearbeitet werden.

In einer weiteren bevorzugten Ausführungsform mischt man die erfindungsgemäßen Pfropfcopolymerisate mit bekannten Kautschukmodifizierten Kunststoffen, z.B. ABS oder ASA. ABS - basierend auf Butadien-Pfropfkautschuken mit Styrol/Acrylnitrilcopolymer - und ASA-Formmassen - basierend auf Acrylat-Pfropfkautschuken mit Styrol/Acrylnitrilcopolymer - sind dem Fachmann bekannt und u.a. beschrieben in DE 1260135 und EP 62901. Es ist bevorzugt, solche bereits schlagzäh modifizierten Thermoplaste durch Zusatz der erfindungsgemäßen Pfropfcopolymerisate und gewünschtenfalls die als Matrices aufgeführten Copolymere aus einem vinylaromatischen Monomeren und einem polaren, copolymerisierbaren, ethylenisch ungesättigten Monomeren zu mattieren.

Die erfindungsgemäßen, thermoplastischen Formmassen werden in der Regel durch bekannte Methoden wie Extrusion, Spritzgießen, Schmelzepressen, Kneten etc. verarbeitet. Die auf diese Weise aufgeschmolzenen Gemische werden üblicherweise nach dem Erkalten zu Formkörpern verarbeitet (in der Regel durch Spritzguß) und anschließend mechanisch geprüft.

Die erfindungsgemäßen thermoplastischen Formmassen lassen sich nach den für die Thermoplastverarbeitung üblichen Verfahren, wie Extrusion und Spritzgießen, zu den verschiedenartigsten Formkörpern, wie Fensterprofilen, Gartenmöbeln, Booten, Schildern, Lampenabdeckungen, Automobilteilen und Kinderspielzeug verarbeiten. Die erfindungsgemäßen thermoplastischen Formmassen eignen sich besonders zur Herstellung von Formkörpern, bei denen eine hohe Kältezähigkeit, eine gute Witterungsstabilität sowie gleichzeitig eine matte Oberfläche gefordert ist.

### Beispiele

Die Kerbschlagzähigkeit aₖ (Spritztemperatur/Prüftemperatur) (in kJ/m²) wurde nach DIN 53453 an bei 220, 250 und 280°C gespritzten Normkleinstäben bei 23°C und -40°C Prüftemperatur bestimmt.

Die Oberflächengüte (matt oder glänzend) wurde visuell durch Betrachtung unter Sonnenlicht bei einem Winkel von 45° zur Formteiloberfläche bestimmt.

Bei der Angabe der mittleren Teilchengrößen handelt es sich in allen Fällen um das Gewichtsmittel der Teilchengrößen, die mittels einer analytischen Ultrazentrifuge entsprechend der Methode von W. Scholtan und H. Lange, Kolloid-Z. und Z.Polymere 250 (1972), Seiten 782 bis 796, bestimmt wurden. Die zentrifugenmessung liefert die integrale Massenverteilung des Teilchendurchmessers eine Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert.
1. Herstellung der Pfropfcopolymerisate A
1.1 Als Siliconemulsion (Dispersion) A1 wurde eine vernetzte Polydimethylsiloxan-Emulsion (hergestellt analog zu Beispiel 1 aus der EP-A 492 376) eingesetzt: Feststoffgehalt (FG): 17,4 %; 156 nm Teilchendurchmesser; Viskosität 4,6 mPa·sec; pH 7; 3 % Vernetzungsgrad; 0,5 % Methacryloxypropyl-Funktionen.
1.2 Herstellung der 1. Hülle A2
1.2.1 Vorlage
   Dispersion A1 (s. Tabelle 1) und Wasser wurden auf 60°C erwärmt und anschließend Kaliumpersulfat (KPS) zugegeben.
1.2.2 Zulauf
   Innerhalb von 1,5 Stunden wurde dann ein Gemisch aus n-Butylacrylat (BA) und Acrylsäureester des Tricyclodecenylalkohols (DCPA) zugetropft. Gleichzeitig wurde ein Gemisch aus Wasser und den Na-Salzen eines Gemisches von C₁₃- und C₁₄-Alkylsulfonsäuren (Seife) zugetropft. Die erhaltene Dispersion A2 wurde nicht isoliert.
1.3 Herstellung der 2. Hülle

Zur Dispersion A2 wurden 5,1 g Kaliumpersulfat zugegeben und die Monomere aus Tabelle 1 (Styrol, Acrylnitril und ggf. Dimethylaminoethylacrylat (DMAEA)) innerhalb von 3 Stunden zugetropft. Es wurde 2 Stunden nachgerührt. Theoretischer Feststoffgehalt: 40,0 %.

**Tabelle 1:**

| Herstellung von Siloxan/Acrylat-Kautschuken | | | |
|---|---|---|---|
| (Alle Mengenangaben in Gramm) | | | |
| Versuch: | 1 (Vergleich) | 2 (Vergleich*) | 1 |
| Vorlage | | | |
| -Komponente A1 | 1839 | | 1839 |
| - Wasser | 3086 | | 3086 |
| - KPS | 4,8 | | 4,8 |
| | | | |
| Zulauf | | | |
| - BA | 1568 | | 1552 |
| - Methacrylsäure | - | | 16 |
| - DCPA | 32 | | 32 |
| - Wasser | 212 | | 212 |
| - Seife | 8 | | 8 |
| | | | |
| Zulauf 2 | | | |
| - KPS | 5,1 | | 5,1 |
| - Acrylnitril | 320 | | 320 |
| - Styrol | 960 | | 935 |
| - DMAEA | - | | 25 |
| | | | |
| Mechanische Eigenschaften | | | |
| a_{K} (220/23) | 26 | 21 | 24 |
| a_{K} (250/23) | 25 | 19 | 27 |
| a_{K} (280/23) | 26 | 19 | 25 |
| a_{K} (280/-40) | 4 | 1 | 4 |
| Oberfläche | glänzend | matt | matt |

| | | | |
|---|---|---|---|
| *) Gemäß Stand der Technik EP 450511, Tabelle 1, Beispiel 2. | | | |

Versuch 1 und Vergleichsversuch 2 wiesen dieselbe Menge an Comonomeren auf, letzteres besaß jedoch keinen Siliconkern.

### Komponente B

Es wurde ein Lösungspolymerisat aus Styrol und Acrylnitril im Gewichts-Verhältnis 65:35 und einer Viskositätszahl von 80 ml/g (gemessen bei 23°C in einer 0,5 gew.-%igen DMF-Lösung) eingesetzt. Herstellung der Abmischungen

Die Kautschuke (Versuch V1, V2 und 1) wurden mit der Komponente B in einem Gewichtsverhältnis 1:1 gemischt und gemeinsam bei 250°C auf einem Doppelschneckenextruder ZSK 30 der Fa. Werner & Pfleiderer extrudiert und granuliert. Aus dem Granulat wurden bei 220, 250 und 280°C Formkörper für die mechanische Prüfung hergestellt (Tabelle 1).

## Patentansprüche

1. Pfropfcopolymerisate, erhältlich durch
(A) Polymerisation von 10 bis 89 Gew.-% einer Mischung bestehend im wesentlichen aus entweder
(a1) 70 bis 99,89 Gew.-% eines C₁-C₁₈-Alkylrestes der Acrylsäure, wobei der Alkylrest einfach mit einer Phenyl- oder Phenoxygruppe substituiert sein kann,
(a2) 0,1 bis 10 Gew.-% eines polyfunktionellen Monomeren,
(a3) 0 bis 29,89 Gew.-% eines von (a1) und (a2) verschiedenen, damit copolymerisierbaren ethylenisch ungesättigten Monomeren, das keine Säuregruppe trägt, und
(a4) 0,01 bis 10 Gew.-% eines mindestens eine Säuregruppe enthaltenden copolymerisierbaren Monomeren
oder
(a5) 49,99 bis 99,99 Gew.-% mindestens eines Diens,
(a6) 0 bis 50 Gew.-% eines damit copolymerisierbaren Monomeren, das keine Säuregruppe trägt, und
(a7) 0,01 bis 10 Gew.-% eines mindestens eine Säuregruppe enthaltenden copolymerisierbaren Monomeren
in Gegenwart von 1 bis 80 Gew.-% eines vernetzten Siliconkautschuks,
und
(B) Polymerisation von 10 bis 89 Gew.-% einer Mischung bestehend im wesentlichen aus
(b1) 50 bis 99,99 Gew.-% einer Styrolverbindung der allgemeinen Formel (I) 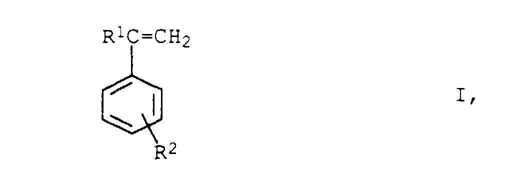 in der R¹ und R² unabhängig voneinander für Wasserstoff, C₁-C₈-Alkyl oder mit C₁-C₄-Alkyl bis zu dreifach substituiertes Phenyl bedeuten und/oder eines C₁-C₈-Alkylesters der Methacryl- oder Acrylsäure,
(b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit C₁-C₄-Alkyl N-substituiertes Maleinimid, Vinylester von aliphatischen C₂-C₈-Carbonsäuren, Acrylamid und Vinylmethylether
und
(b3) 0,01 bis 20 Gew.-% eines mindestens eine basische Gruppe enthaltenden copolymerisierbaren Monomeren
in Gegenwart des Pfropfcopolymerisates (A).

2. Pfropfcopolymerisate gemäß Anspruch 1, dadurch gekennzeichnet, daß die Polymerteilchen eine mittlere Teilchengröße im Bereich von 0,05 bis 10 µm aufweisen.

3. Pfropfcopolymerisate gemäß den Ansprüchen 1 oder 2, dadurch gekennzeichnet, daß man als Komponente (a4) oder Komponente (a7) 0,01 bis 10 Gew.-% eines mindestens eine basische Gruppe enthaltenden copolymerisierbaren Monomeren und als Komponente (b3) 0,01 bis 20 Gew.-% eines mindestens eine Säuregruppe enthaltenden copolymerisierbaren Monomeren einsetzt.

4. Pfropfcopolymerisat nach Anspruch 3, dadurch gekennzeichnet, daß man als Komponente (a4) einen C₂-C₆-Alkylester der Methacryl- oder Acrylsäure, wobei der C₂-C₆-Alkylteil bis zu 2-fach mit einer Aminogruppe substituiert sein kann, und als Komponente (b3) eine α,β-ungesättigte C₁-C₆-Carbonsäure einsetzt.

5. Thermoplastische Formmasse, bestehend im wesentlichen aus 1 bis 95 Gew.-% eines Pfropfcopolymerisats gemäß den Ansprüchen 1 bis 4 und 5 bis 99 Gew.-% mindestens eines Polymeren mit einer Glasübergangstemperatur von mehr als 25°C als Matrix und gegebenenfalls übliche Zusatz- und Hilfsstoffe.

6. Verwendung der Pfropfcopolymerisate gemäß den Ansprüchen 1 bis 4 zur Herstellung von thermoplastischen Formmassen.

7. Verwendung der thermoplastischen Formmassen gemäß Anspruch 5 zur Herstellung von Formkörpern.

8. Formkörper, erhältlich aus den thermoplastischen Formmassen gemäß Anspruch 5.

9. Verfahren zur Herstellung der Pfropfcopolymerisate gemäß Anspruch 1, dadurch gekennzeichnet, daß man
(A) 10 bis 89 Gew.-% einer Mischung bestehend im wesentlichen aus entweder
(a1) 70 bis 99,89 Gew.-% eines C₁-C₁₈-Alkylrestes der Acrylsäure, wobei der Alkylrest einfach mit einer Phenyl- oder Phenoxygruppe substituiert sein kann,
(a2) 0,1 bis 10 Gew.-% eines polyfunktionellen Monomeren,
(a3) 0 bis 29,89 Gew.-% eines von (a1) und (a2) verschiedenen, damit copolymerisierbaren ethylenisch ungesättigten Monomeren, das keine Säuregruppe trägt, und
(a4) 0,01 bis 10 Gew.-% eines mindestens eine Säuregruppe enthaltenden copolymerisierbaren Monomeren
oder
(a5) 49,99 bis 99,99 Gew.-% mindestens eines Diens,
(a6) 0 bis 50 Gew.-% eines damit copolymerisierbaren Monomeren, das keine Säuregruppe trägt, und
(a7) 0,01 bis 10 Gew.-% eines mindestens eine Säuregruppe enthaltenden copolymerisierbaren Monomeren
in Gegenwart von 1 bis 80 Gew.-% eines vernetzten Siliconkautschuks polymerisiert
und
(B) 10 bis 89 Gew.-% einer Mischung bestehend im wesentlichen aus
(b1) 50 bis 99,99 Gew.-% einer Styrolverbindung der allgemeinen Formel (I) 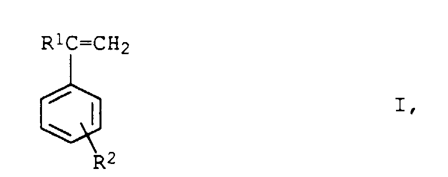 in der R¹ und R² unabhängig voneinander für Wasserstoff, C₁-C₈-Alkyl oder mit C₁-C₄-Alkyl bis zu dreifach substituiertes Phenyl bedeuten und/oder eines C₁-C₈-Alkylesters der Methacryl- oder Acrylsäure,
(b2) 0 bis 50 Gew.-% eines Monomeren, ausgewählt aus der Gruppe, bestehend aus Methacrylnitril, Acrylnitril, Methacrylsäure, Acrylsäure, Maleinsäureanhydrid, mit C₁-C₄-Alkyl N-substituiertes Maleinimid, Vinylester von aliphatischen C₂-C₈-Carbonsäuren, Acrylamid und Vinylmethylether
und
(b3) 0,01 bis 20 Gew.-% eines mindestens eine basische Gruppe enthaltenden copolymerisierbaren Monomeren
in Gegenwart des Pfropfcopolymerisates (A) polymerisiert.

10. Verfahren nach Anspruch 9, dadurch gekennzeichnet, daß man als Komponente (a4) oder Komponente (a7) 0,01 bis 10 Gew.-% eines mindestens eine basische Gruppe enthaltenden copolymerisierbaren Monomeren und als Komponente (b3) 0,01 bis 20 Gew.-% eines mindestens eine Säuregruppe enthaltenden copolymerisierbaren Monomeren einsetzt.

## Claims

1. A graft copolymer obtainable by
(A) polymerization of from 10 to 89% by weight of a mixture consisting essentially of either
(a1) from 70 to 99.89% by weight of a C₁-C₁₈-alkyl ester of acrylic acid, where the alkyl radical may be monosubstituted by phenyl or phenoxy,
(a2) from 0.1 to 10% by weight of a polyfunctional monomer,
(a3)from 0 to 29.89% by weight of an ethylenically unsaturated monomer which differs from (a1) and (a2), is copolymerizable therewith and carries no acid group and
(a4) from 0.01 to 10% by weight of a copolymerizable monomer containing at least one acid group
or
(a5) from 49.99 to 99.99% by weight of at least one diene,
(a6) from 0 to 50% by weight of a monomer which is copolymerizable therewith and carries no acid group and
(a7) from 0.01 to 10% by weight of a copolymerizable mono:5 mer containing at least one acid group
in the presence of from 1 to 80% by weight of a crosslinked silicone rubber
and
(B) polymerization of from 10 to 89% by weight of a mixture consisting essentially of
(b1) from 50 to 99.99% by weight of a styrene compound of the formula (I) 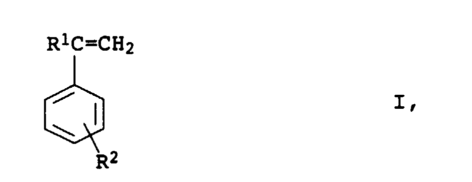 where R¹ and R² independently of one another are each hydrogen, C₁-C₁₈alkyl or C₁-C₄-alkyl-monosubstituted, C₁-C₄-alkyl-disubstituted or C₁-C₄-alkyl-trisubstituted phenyl, or of a C₁-C₈-alkyl ester of methacrylic or acrylic acid,
(b2) from 0 to 50% by weight of a monomer selected from the group consisting of methacrylonitrile, acrylonitrile, methacrylic acid, acrylic acid, maleic anhydride, maleimide N-substituted by C₁-C₄-alkyl, vinyl esters of aliphatic C₂-C₈-carboxylic acids, acrylamide and vinyl methyl ether
and
(b3) from 0.01 to 20% by weight of a copolymerizable monomer containing at least one basic group
in the presence of the graft copolymer (A).

2. A graft copolymer as claimed in claim 1, wherein the polymer particles have a median particle size of from 0.05 to 10 µm.

3. A graft copolymer as claimed in claim 1 or 2, wherein from 0.01 to 10% by weight of a copolymerizable monomer containing at least one basic group is used as component (a4) or component (a7) and from 0.01 to 20% by weight of a copolymerizable monomer containing at least one acid group is used as component (b3).

4. A graft copolymer as claimed in claim 3, wherein a C₂-C₆-alkyl ester of methacrylic or acrylic acid, where the C₂-C₆-alkyl moiety may be monosubstituted or disubstituted by amino, is used as component (a4) and an α,β-unsaturated C₁-C₆-carboxylic acid is used as component (b3).

5. A thermoplastic molding material consisting essentially of from 1 to 95% by weight of a graft copolymer as claimed in any of claims 1 to 4 and from 5 to 99% by weight of at least one polymer having a glass transition temperature of more than 25°C as the matrix and, if required, conventional additives and assistants.

6. Use of a graft copolymer as claimed in any of claims 1 to 4 for the preparation of thermoplastic molding materials.

7. Use of a thermoplastic molding material as claimed in claim 5 for the production of moldings.

8. A molding obtainable from a thermoplastic molding material as claimed in claim 5.

9. A process for the preparation of a graft copolymer as claimed in claim 1, wherein
(A) from 10 to 89% by weight of a mixture consisting essentially of either
(a1) from 70 to 99.89% by weight of a C₁-C₁₈-alkyl ester of acrylic acid, where the alkyl radical may be monosubstituted by phenyl or phenoxy,
(a2) from 0.1 to 10% by weight of a polyfunctional monomer,
(a3) from 0 to 29.89% by weight of an ethylenically unsaturated monomer which differs from (a1) and (a2), is copolymerizable therewith and carries no acid group and
(a4) from 0.01 to 10% by weight of a copolymerizable monomer containing at least one acid group
or
(a5) from 49.99 to 99.99% by weight of at least one diene,
(a6) from 0 to 50% by weight of a monomer which is copolymerizable therewith and carries no acid group and
(a7) from 0.01 to 10% by weight of a copolymerizable monomer containing at least one acid group
are polymerized in the presence of from 1 to 80% by weight of a crosslinked silicone rubber
and
(B) from 10 to 89% by weight of a mixture consisting essentially of
(b1) from 50 to 99.99% by weight of a styrene compound of the formula (I) 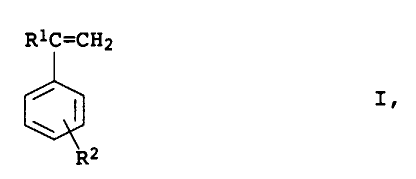 where R¹ and R² independently of one another are each hydrogen, C₁-C₈-alkyl or C₁-C₄-alkyl-monosubstituted, C₁-C₄-alkyl-disubstituted or C₁-C₄-alkyl-trisubstituted phenyl, or of C₁-C₈-alkyl ester of methacrylic or acrylic acid,
(b2)from 0 to 50% by weight of a monomer selected from the group consisting of methacrylonitrile, acrylonitrile, methacrylic acid, acrylic acid, maleic anhydride, maleimide N-substituted by C₁-C₄-alkyl, vinyl esters of aliphatic C₂-C₈-carboxylic acids, acrylamide and vinyl methyl ether
and
(b3) from 0.01 to 20% by weight of a copolymerizable monomer containing at least one basic group
are polymerized in the presence of the graft copolymer (A).

10. A process as claimed in claim 9, wherein from 0.01 to 10% by weight of a copolymerizable monomer containing at least one basic group are used as component (a4) or component (a7) and from 0.01 to 20% by weight of a copolymerizable monomer containing at least one acid group are used as component (b3).

## Revendications

1. Copolymères greffés que l'on obtient par
(A) polymérisation à concurrence de 10 à 89% en poids d'un mélange constitué essentiellement par, soit
(a1) à concurrence de 70 à 99,89% en poids, un radical alkyle en C₁-C₁₈ d'acide acrylique, le radical alkyle pouvant porter un substituant phényle ou phénoxy,
(a2) à concurrence de 0,1 à 10% en poids, un monomère polyfonctionnel,
(a3) à concurrence de 0 à 29,89% en poids, un monomère à insaturation éthylénique différent de (a1) et de (a2), copolymérisable avec ces derniers, qui ne porte pas de groupe acide, et
(a4) à concurrence de 0,01 à 10% en poids, un monomère copolymérisable contenant au moins un groupe acide,
soit
(a5) à concurrence de 49,99 à 99,99% en poids, au moins un diène,
(a6) à concurrence de 0 à 50% en poids, un monomère copolymérisable avec ce dernier, qui ne porte pas de groupe acide, et
(a7) à concurrence de 0,01 à 10% en poids, un monomère copolymérisable contenant au moins un groupe acide,
en présence de 1 à 80% en poids d'un caoutchouc de silicone réticulé, et
(B) polymérisation, à concurrence de 10 à 89% en poids, d'un mélange constitué essentiellement par
(b1) à concurrence de 50 à 99,9% en poids, un composé de styrène répondant à la formule générale (I) 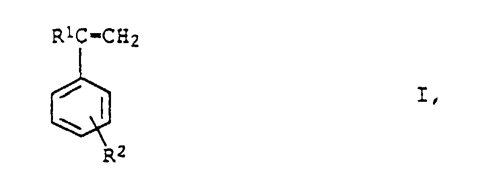 dans laquelle R1 et R2 représentent, indépendamment l'un de l'autre, un atome d'hydrogène, un groupe alkyle en C₁-C₈ ou un groupe phényle portant jusqu'à 3 substituants alkyle en C₁ -C₄, et/ou un ester alkylique en C₁ -C₈ d'acide méthacrylique ou d'acide acrylique,
(b2) à concurrence de 0 à 50% en poids, un monomère choisi parmi le groupe constitué par le méthacrylonitrile, l'acrylonitrile, l'acide méthacrylique, l'acide acrylique, l'anhydride maléique, le maléimide portant un substituant alkyle en C₁-C₄ sur l'atome d'azote, des esters vinyliques d'acides carboxyliques aliphatiques en C₂-C₈, l'acrylamide et l'éther vinylméthylique,
et
(b3) à concurrence de 0,01 à 20% en poids, un monomère copolymérisable contenant au moins un groupe basique,
en présence du copolymère greffé (A).

2. Copolymères greffés selon la revendication 1, caractérisés en ce que les particules de polymères présentent une granulométrie moyenne dans le domaine de 0,05 à 10 µm.

3. Copolymères greffés selon la revendication 1 ou 2, caractérisés en ce qu'on met en oeuvre, comme composant (a4) ou comme composant (a7), de 0,01 à 10% en poids d'un monomère copolymérisable contenant au moins un groupe basique, et comme composant (b3), de 0,01 à 20% en poids d'un monomère copolymérisable contenant au moins un groupe acide.

4. Copolymères greffés selon la revendication 3, caractérisés en ce qu'on met en oeuvre, comme composant (a4), un ester alkylique en C₂-C₆ d'acide méthacrylique ou d'acide acrylique, la fraction alkyle en C₂-C₆ pouvant porter jusqu'à 2 substituants amino, et comme composant (b3), un acide carboxylique en C₁-C₆ à insaturation α,β.

5. Masses à mouler thermoplastiques constituées essentiellement, à concurrence de 1 à 95% en poids, par un copolymère greffé selon les revendications 1 à 4 et, à concurrence de 5 à 99% en poids, par au moins un polymère dont la température de transition vitreuse est supérieure à 25°C, à titre de matrice, et éventuellement des additifs et des adjuvants habituels.

6. Utilisation des copolymères greffés selon les revendications 1 à 4, pour la préparation de masses à mouler thermoplastiques.

7. Utilisation des masses à mouler thermoplastiques selon la revendication 5, pour la fabrication de corps moulés.

8. Corps moulés que l'on obtient à partir des masses à mouler thermoplastiques selon la revendication 5.

9. Procédé pour la préparation des copolymères greffés selon la revendication 1, caractérisé en ce qu'on polymérise
(A) à concurrence de 10 à 89% en poids d'un mélange constitué essentiellement par, soit
(a1) à concurrence de 70 à 99,89% en poids, un radical alkyle en C₁-C₁₈ d'acide acrylique, le radical alkyle pouvant porter un substituant phényle ou phénoxy,
(a2) à concurrence de 0,1 à 10% en poids, un monomère polyfonctionnel,
(a3) à concurrence de 0 à 29,89% en poids, un monomère à insaturation éthylénique différent de (a1) et de (a2), copolymérisable avec ces derniers, qui ne porte pas de groupe acide, et
(a4) à concurrence de 0,01 à 10% en poids, un monomère copolymérisable contenant au moins un groupe acide,
soit
(a5) à concurrence de 49,99 à 99,99% en poids, au moins un diène,
(a6) à concurrence de 0 à 50% en poids, un monomère copolymérisable avec ce dernier, qui ne porte pas de groupe acide, et
(a7) à concurrence de 0,01 à 10% en poids, un monomère copolymérisable contenant au moins un groupe acide,
en présence de 1 à 80% en poids d'un caoutchouc de silicone réticulé, et en ce qu'on polymérise
(B) à concurrence de 10 à 89% en poids, un mélange constitué essentiellement par
(b1) à concurrence de 50 à 99,9% en poids, un composé de styrène répondant à la formule générale (I) 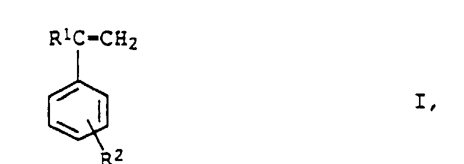 dans laquelle R1 et R2 représentent, indépendamment l'un de l'autre, un atome d'hydrogène, un groupe alkyle en C₁-C₈ ou un groupe phényle portant jusqu'à 3 substituants alkyle en C₁-C₄, et/ou un ester alkylique en C₁-C₈ d'acide méthacrylique ou d'acide acrylique,
(b2) à concurrence de 0 à 50% en poids, un monomère choisi parmi le groupe constitué par le méthacrylonitrile, l'acrylonitrile, l'acide méthacrylique, l'acide acrylique, l'anhydride maléique, le maléimide portant un substituant alkyle en C₁-C₄ sur l'atome d'azote, des esters vinyliques d'acides carboxyliques aliphatiques en C₂-C₈, l'acrylamide et l'éther vinylméthylique,
et
(b3) à concurrence de 0,01 à 20% en poids, un monomère copolymérisable contenant au moins un groupe basique,
en présence du copolymère greffé (A).

10. Procédé selon la revendication 9, caractérisé en ce qu'on met en oeuvre, comme composant (a4) ou comme composant (a7), de 0,01 à 10% en poids d'un monomère copolymérisable contenant au moins un groupe basique, et comme composant (b3), de 0,01 à 20% en poids d'un monomère copolymérisable contenant au moins un groupe acide.
